Europäisches Patentamt

European Patent Office

Office européen des brevets

(11) Veröffentlichungsnummer: **0 472 773 A1**

## EUROPÄISCHE PATENTANMELDUNG

(21) Anmeldenummer: **90116751.0**

(22) Anmeldetag: **31.08.90**

(51) Int. Cl.⁵: **B60R 22/06**

(43) Veröffentlichungstag der Anmeldung:
**04.03.92 Patentblatt 92/10**

(84) Benannte Vertragsstaaten:
**DE ES FR GB IT SE**

(71) Anmelder: **TRW REPA GMBH**
**Industriestrasse 20**
**W-7077 Alfdorf(DE)**

(72) Erfinder: **Wier, Franz**
**Untere Strasse 21**
**W-7071 Göggingen(DE)**

(74) Vertreter: **Leiser, Gottfried, Dipl.-Ing. et al**
**Patentanwälte Prinz, Leiser, Bunke & Partner**
**Manzingerweg 7**
**W-8000 München 60(DE)**

(54) Befestigung eines schwenkbaren Verankerungsbeschlages in einem Sicherheitsgurtsystem.

(57) Zur Minimierung der Gefahr von Kopfverletzungen in einem Passiv-Sicherheitsgurtsystem wird nach einer unfalltypischen Beanspruchung der obere Verankerungsbeschlag (24) mit Steckzunge (22) selbsttätig in eine Sicherheitsstellung verschwenkt, in welcher der Verankerungsbeschlag nur minimal in den Kopfraumteil des Fahrgastraumes hineinragt.

Fig. 2c

Die Erfindung betrifft die Befestigung eines schwenkbaren Verankerungsbeschlages in Höhe des Kopfbereiches eines Fahrzeuginsassen an einem Fahrzeugaufbauteil in einem Sicherheitsgurtsystem.

Zu den lasttragenden Teilen eines Sicherheitsgurtsystems gehören starre Teile wie Beschläge, die an Fahrzeugaufbauteilen verankert werden, und Gurtverschlüsse mit Schloß und Steckzunge, die in der Regel in ergonomisch günstigen Positionen angebracht werden. Im normalen Fahrbetrieb kommt der Fahrzeuginsasse mit solchen starren Teilen des Sicherheitsgurtsystems nicht in Berührung. Bei einem komplexen Unfallablauf kann hingegen nicht ausgeschlossen werden, daß empfindliche Körperpartien auch mit harten oder starren Bestandteilen des Sicherheitsgurtsystems in Berührung kommen, die im normalen Fahrbetrieb ausreichend weit von diesen Körperpartien entfernt sind.

Bei Passiv-Sicherheitsgurtsystemen wird der obere Verankerungspunkt des Schultergurtes entlang dem oberen Türrahmen zwischen der Gurtanlegeposition und der Gurtablegeposition verfahren. Bei normaler Benutzung wird also kein Verschluß benötigt, um den Gurt an- bzw. abzulegen. Damit aber beispielsweise bei einer Betriebsstörung ein An- und Ablegen des Sicherheitsgurtes von Hand möglich ist, wird zusätzlich ein Verschluß vorgesehen, der in der Nähe des oberen Verankerungspunktes des Schultergurtes angeordnet wird, da sich am unteren Verankerungspunkt bereits der Gurtaufroller befindet. Es wurde nun gefunden, daß ein solcher Verschluß, der mindestens einen Beschlag, eine Steckzunge und ein Schloß beinhaltet, bei komplexen Unfallabläufen eine Gefährdung für den Kopfbereich des Fahrzeuginsassen darstellen kann.

Durch die Erfindung wird eine Befestigung eines schwenkbaren Verankerungsbeschlages geschaffen, die eine Minimierung der Verletzungsgefahr an dem starren Verankerungsbeschlag oder mit diesem verbundenen Teilen auch unter ungünstigen Bedingungen eines komplexen Unfallablaufes gewährleistet.

Gemäß der Erfindung ist die Befestigung mit einer Sicherheitseinrichtung versehen, die den Verankerungsbeschlag nach einer unfalltypischen Beanspruchung in einer aus dem Kopfbereich des Fahrzeuginsassen fortgeschwenkten Sicherheitsstellung hält. Der Verankerungsbeschlag und die mit ihm verbundenen, starren Teile können somit nach einer unfalltypischen Beanspruchung, beispielsweise einem anfänglichen Aufprall des Fahrzeugs bei einem komplexen Unfallgeschehen, nicht in den Teil des Fahrgastraumes hineinragen, in welchen sich der Kopf des Fahrzeuginsassen beispielsweise bei einem Überschlag des Fahrzeugs bewegen kann. Von dem Verankerungsbeschlag und den mit ihm verbundenen starren Teilen geht daher keine wesentliche Verletzungsgefahr aus.

Besonders einfach und wirksam ist eine Sicherheitseinrichtung mit einer Feder, die den Verankerungsbeschlag in Richtung der aus dem Kopfbereich fortgeschwenkten Sicherheitsstellung belastet. Die Feder kann permanent wirksam sein oder aber, gemäß einer besonderen Ausführungsform der Erfindung, im Normalzustand vor einer unfalltypischen Beanspruchung unwirksam gehalten sein und erst durch die bei Beanspruchung am Verankerungsbeschlag auftretenden Zugkräfte freigegeben werden.

Bei einer anderen Ausführungsform der Erfindung ist der Verankerungsbeschlag auf einer Achse befestigt, die mittels Lagerbuchsen aus Kunststoff in Lageröffnungen des Fahrzeugaufbauteils gelagert ist. Das Kunststoffmaterial ist von solcher Beschaffenheit, daß es unter einer unfalltypischen Beanspruchung in die Freiräume zwischen Fahrzeugaufbauteil und Verankerungsbeschlag fließt, um den Verankerungsbeschlag in einer Schwenkstellung zu blockieren, die der Sicherheitsstellung zumindest nahekommt.

Bei einer weiteren Ausführungsform der Erfindung ist die Achse des Verankerungsbeschlags in Lageröffnungen befestigt, welche eine nahe der Achse verjüngte Ausbuchtung aufweist, so daß die Achse bei einer unfalltypischen Beanspruchung unter Materialverformung durch die Verjüngung in die Ausbuchtung gelangt und sich in dieser festklemmt, um den an die Achse gekoppelten Verankerungsbeschlag zu blockieren.

Besonders zweckmäßig ist die Verwendung der erfindungsgemäßen Befestigung in einem Passiv-Sicherheitsgurtsystem, bei welchem - wie eingangs bereits erwähnt - ein Gurtverschluß mit Steckzunge und Schloß entlang dem oberen Türrahmen zwischen einer Gurtablegestellung und einer Gurtanlegestellung verfahren wird.

Weitere Merkmale und Vorteile der Erfindung ergeben sich aus der folgenden Beschreibung und aus der Zeichnung, auf die Bezug genommen wird. In der Zeichnung zeigen:

Fig. 1
eine schematische Perspektivansicht eines Passiv-Sicherheitsgurtsystems in einem Personenfahrzeug bei teilweise geöffneter Tür;

Fig. 2a, 2b und 2c
eine Ausführungsform der erfindungsgemäßen Befestigung in drei verschiedenen Stellungen;

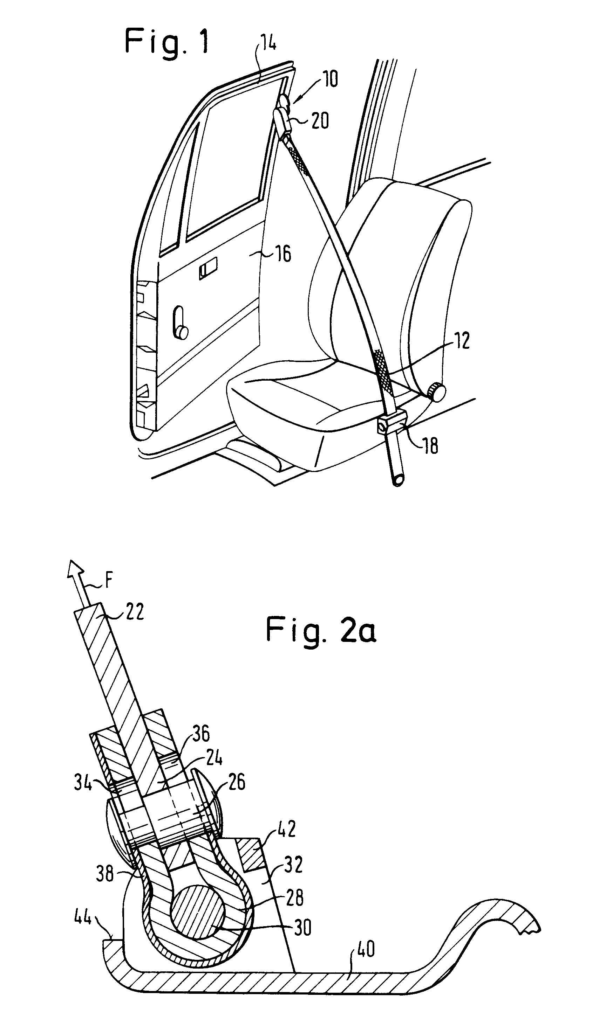

Fig. 3
einen Teilschnitt der in den Fig. 2a bis 2c gezeigten Befestigung;

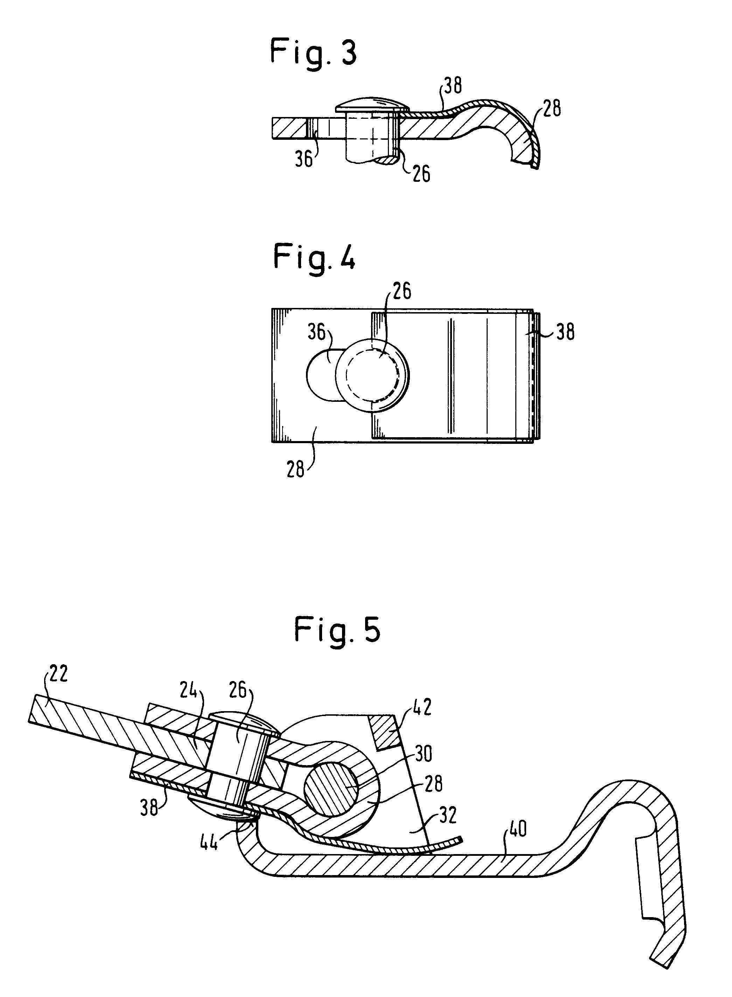

Fig. 4
eine Draufsicht des in Fig. 3 gezeigten Teils der Befestigung;

Fig. 5
eine zweite Ausführungsform der Befestigung;
Fig. 6 und 7
eine dritte Ausführungsform der Befestigung; und
Fig. 8 und 9
eine vierte Ausführungsform der Befestigung.

Bei dem in Fig. 1 gezeigten Passiv-Sicherheitsgurtsystem wird der obere Verankerungspunkt 10 des Schultergurtes 12 entlang dem oberen Bereich des Fensterrahmens 14 einer Fahrzeugtür 16 zwischen der in der Figur gezeigten Gurtanlegestellung und einer vorverlagerten Gurtablegestellung mittels eines in einer Schiene geführten Gleiters verfahren. Das untere Ende des Schultergurtes 12 wird von einem am Fahrzeugboden befestigten Gurtaufroller 18 aufgenommen. Das Gurtband ist über ein Schloß 20 und eine Steckzunge 22 an einen Verankerungsbeschlag angeschlossen, der seinerseits mit dem Gleiter verbunden ist, der in der Führungsschiene entlang dem oberen Fensterrahmenbereich der Tür 16 verschiebbar ist.

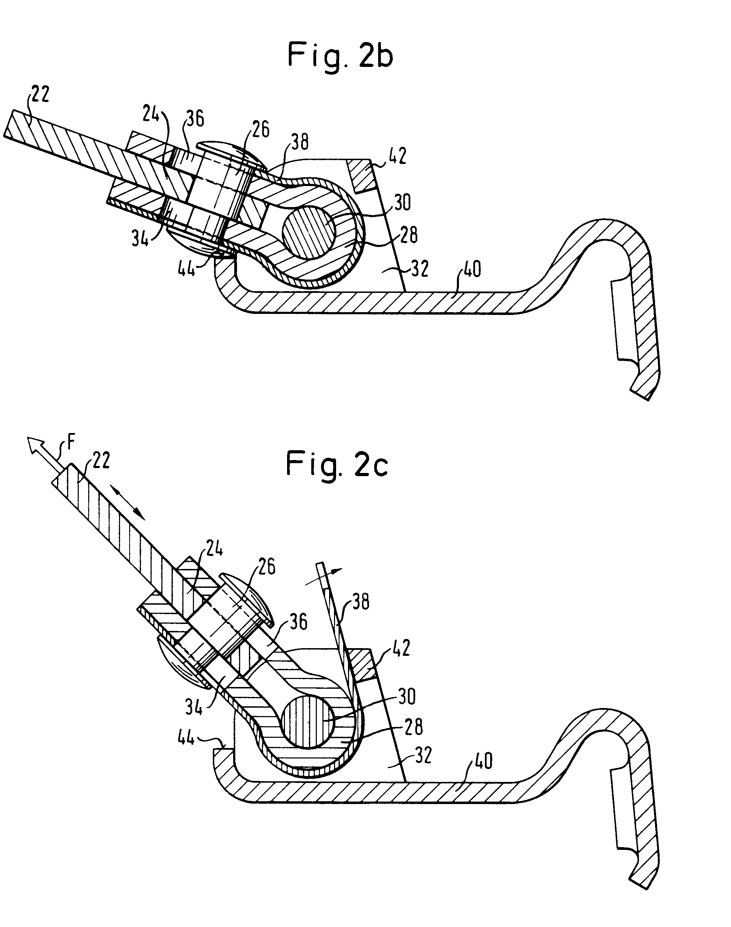

Bei der in den Fig. 2a, 2b und 2c gezeigten Ausführungsform der Befestigung ist die mit 22 bezeichnete Steckzunge des Verschlusses einteilig mit einem Verankerungsbeschlag 24 ausgebildet, der seinerseits durch wenigstens einen Niet 26 mit einem Bügel 28 verbunden ist. Der Bügel 28 weist zwei parallele, voneinander beabstandete Schenkel auf, zwischen denen der Verankerungsbeschlag 24 aufgenommen ist. Ferner weist der Bügel 28 einen gekrümmten Abschnitt auf, der auf einer Achse 30 befestigt ist. Die Achse 30 ist in zwei voneinander beabstandeten Lagersockeln 32 drehbar gelagert. Der Niet 26 durchsetzt mit seinem Schaft eine Befestigungsöffnung des Verankerungsbeschlages 24 sowie zwei als Langlöcher ausgebildete Öffnungen 34, 36 in den Schenkeln des Bügels 28. Der Schaftteil des Niets 26 befindet sich im Normalzustand an dem der Achse 30 benachbarten Ende der Öffnungen 34, 36.

Eine Blattfeder 38 erstreckt sich entlang dem einen Schenkel des Bügels 28 und um dessen gekrümmten Teil herum bis unter den Kopfteil des Niets 26. Die Blattfeder 38 ist so zwischen den Kopfteilen des Niets 26 eingespannt. Wie aus den Fig. 3 und 4 ersichtlich ist, greift eines der beiden Enden der Blattfeder 38 nur teilweise unter den entsprechenden Kopfteil des Niets 26 und ist U-förmig ausgebildet.

Die Lagersockel 32 sind an einem Beschlag 40 befestigt, der seinerseits in nicht näher gezeigter Weise an den Gleiter anschließt, mit dem der Beschlag 40 mit dem daran gelagerten Verankerungsbeschlag 24 in der Führungsschiene entlang dem oberen Türrahmen verfahren wird.

In Fig. 2a nimmt der Verankerungsbeschlag 24 mit der Steckzunge 22 eine Schwenkstellung ein, die an einen Anschlag 42 am Lagersockel 32 angrenzt. Ein zweiter Anschlag 44 ist an dem Beschlag 40 gebildet. Zwischen diesen Anschlägen 42, 44 liegt der Verschwenkungsbereich des Verankerungsbeschlages 24 mit Steckzunge 22. Je nach Größe und Sitzposition des Fahrzeuginsassen nimmt der Verankerungsbeschlag 24 eine unterschiedliche Schwenkposition ein. Bei der in Fig. 2a gezeigten Schwenkposition ragt der Verankerungsbeschlag mit Steckzunge 22 um ein beträchtliches Maß in denjenigen Teil des Fahrgastraumes hinein, in welchem sich die Kopfpartie des Fahrzeuginsassen befindet. Bei der in Fig. 2b gezeigten Schwenkstellung ist hingegen der Verankerungsbeschlag 24 mit Steckzunge 22 aus diesem Kopfraumbereich herausgeschwenkt und nahezu an die Scheibe der Fahrzeugtür 16 angelegt. Diese in Fig. 2b gezeigte Stellung wird als "Sicherheitsstellung" definiert.

Wenn bei einer unfalltypischen Beanspruchung Zugkräfte in Richtung F an der Steckzunge 22 und somit am Verankerungsbeschlag 24 wirksam werden, tritt eine Verlagerung des Niets 26 in den langlochförmigen Öffnungen 34, 36 des Bügels 28 auf. Durch diese Verlagerung in Richtung der Kraft F gibt der eine Kopfteil des Niets 26 das U-förmige Ende der Blattfeder 38 frei. Diese entspannt sich und drückt gegen den Anschlag 42, wie in Fig. 2c gezeigt, wodurch der Bügel 28 und mit ihm der Verankerungsbeschlag 24 sowie die Steckzunge 22 in Richtung der in Fig. 2b gezeigten Sicherheitsstellung verschwenkt werden. Die Blattfeder 38 bleibt also unwirksam, bis eine unfalltypische Beanspruchung aufgetreten ist. Erst nach einer solchen Beanspruchung wird das Federpotential freigegeben, um den Verankerungsbeschlag in Richtung seiner Sicherheitsstellung zu verschwenken.

Bei der Ausführungsform nach Fig. 5 ist die Blattfeder 38 an ihrem einen Ende fest unter einem Kopfteil des Niets 26 eingespannt, an ihrem anderen Ende jedoch frei und stützt sich an der Innenseite des Beschlages 40 ab. Die Blattfeder 38 ist also permanent wirksam und belastet den Verankerungsbeschlag ständig in Richtung des Anschlages 44, also in Richtung der Sicherheitsstellung.

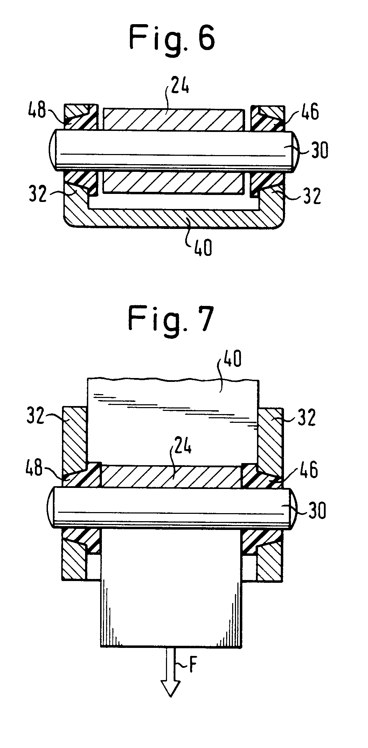

Bei der in den Fig. 6 und 7 gezeigten Ausführungsform ist die Achse 30 in den Lagersockeln 32 des Beschlages 40 mittels zweier Kunststoffbuchsen 46, 48 drehbar gelagert. Diese Kunststoffbuchsen 46, 48 sind aus einem Kunststoffmaterial von solcher Beschaffenheit, daß es unter einer unfalltypischen Beanspruchung in die Freiräume zwischen Lagersockeln 32 und Verankerungsbeschlag 24 fließt. Der Zustand vor der Unfallbeanspruchung ist in Fig. 6, der Zustand nach einer solchen Beanspruchung in Fig. 7 gezeigt. Wie aus Fig. 7 ersichtlich ist, gelangt das Material der Kunststoffbuchsen 46, 48 durch Fließen in unmittelbare Anlage an den Verankerungsbeschlag 24, wodurch dieser in seiner jeweiligen Schwenkstellung blockiert wird. Diese Schwenkstellung kommt in der Regel der Sicherheitsstellung zumindest nahe.

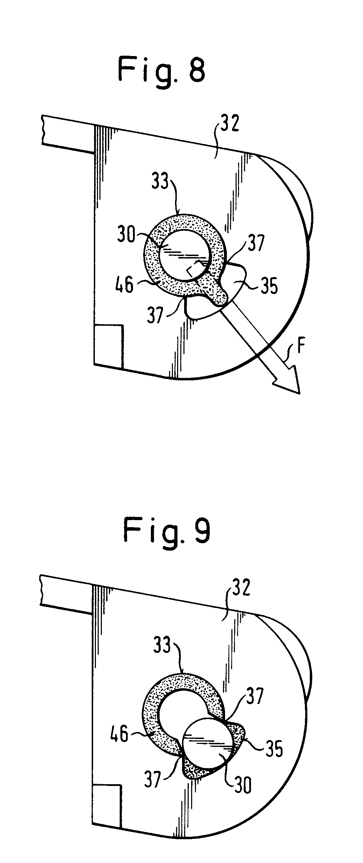

Bei der in den Fig. 8 und 9 gezeigten Ausführungsform ist die Achse 30 drehbar in Lageröffnungen 33 in den Lagersockeln 32 gelagert. Diese Lageröffnungen 33 sind über den größten Teil ihres Umfangs kreisförmig und öffnen sich im übrigen Teil ihres Umfangs etwa in Richtung einer bei einem Unfall wirkenden Kraft zu einer Ausbuchtung 35 hin. Zwischen der Ausbuchtung 35 und dem kreisförmigen Teil der Lageröffnung 33 ist eine Verjüngung 37 wirksam, um die Achse normalerweise in dem kreisförmigen Teil festzuhalten. Bei einer unfalltypischen Beanspruchung gelangt die Achse 30 unter Verformung von Material in die Ausbuchtung 35, in welcher sich die Achse 30 mittels der verformten Teile festklemmt. Dadurch wird auch der an die Achse 30 gekoppelte Verankerungsbeschlag 24 in seiner momentanen Schwenkstellung blockiert, die der Sicherheitsstellung in der Regel nahekommt. In den Fig. 8 und 9 ist auch eine Lagerbuchse 46 gezeigt, welche sich beim Übergang der Achse 30 in die Ausbuchtung 35 mitverformt. Die Lagerbuchse 46 kann jedoch auch fehlen, wenn die Achse 30 unmittelbar in die Lageröffnungen 33 eingepaßt ist. Der Übergang der Achse 30 in die Ausbuchtung 35 erfolgt dann hauptsächlich durch Verformung der Metallspitzen, welche die Verjüngung 37 bilden. Die verformten Metallspitzen klemmen die Achse anschließend fest.

**Patentansprüche**

1. Befestigung eines schwenkbaren Verankerungsbeschlages (24) in Höhe des Kopfbereiches eines Fahrzeuginsassen an einem lasttragenden Fahrzeugteil (40) in einem Sicherheitsgurtsystem, dadurch gekennzeichnet, daß eine Sicherheitseinrichtung (38; 46, 48) vorgesehen ist, die den Verankerungsbeschlag (24) nach einer unfalltypischen Beanspruchung in einer aus dem Kopfbereich des Fahrzeuginsassen fortgeschwenkten Sicherheitsstellung hält.

2. Befestigung nach Anspruch 1, dadurch gekennzeichnet, daß die Sicherheitseinrichtung eine Feder (38) umfaßt, die den Verankerungsbeschlag in Richtung der aus dem Kopfbereich fortgeschwenkten Sicherheitsstellung belastet.

3. Befestigung nach Anspruch 2, dadurch gekennzeichnet, daß die Feder (38) als Blattfeder ausgebildet ist, die an ihrem ersten Ende unmittelbar an dem Verankerungsbeschlag (24) befestigt ist und deren zweites Ende zur Abstützung an dem Fahrzeugteil (40) ausgebildet und angeordnet ist.

4. Befestigung nach Anspruch 2 oder 3, dadurch gekennzeichnet, daß die Feder (38) im Normalzustand vor einer unfalltypischen Beanspruchung unwirksam gehalten ist und durch die bei Beanspruchung am Verankerungsbeschlag auftretenden Zugkräfte (F) freigegeben wird.

5. Befestigung nach Anspruch 4, dadurch gekennzeichnet, daß der Verankerungsbeschlag (24) durch einen Niet (26) zwischen den Schenkeln eines Bügels (28) befestigt ist, der seinerseits auf einer am Fahrzeugteil (40) drehbar gelagerten Achse (30) befestigt ist, daß das erste Ende der Blattfeder (38) durch den Niet (26) an dem Verankerungsbeschlag (24) befestigt ist, daß das zweite Ende der Blattfeder (38) U-förmig ausgebildet ist, daß die Blattfeder (38) von dem Niet (26) ausgehend längs des Verankerungsbeschlages (24) und um dessen Schwenklager herumgeführt ist, daß die Schenkel des U-förmigen Endes der Blattfeder (38) unter den Kopfteil des Niets (26) greifen und daß die vom Schaft des Niets (26) durchsetzten Öffnungen (34, 36) der Schenkel des Bügels (28) langlochförmig ausgebildet sind.

6. Befestigung nach Anspruch 2 oder 3, dadurch gekennzeichnet, daß die Feder (38) den Verankerungsbeschlag (24) permanent in Richtung der aus dem Kopfbereich fortgeschwenkten Stellung belastet.

7. Befestigung nach Anspruch 1, dadurch gekennzeichnet, daß der Verankerungsbeschlag auf einer Achse (30) befestigt ist, die mittels Lagerbuchsen (46, 48) aus Kunststoff in Lageröffnungen des Fahrzeugteils (40) gelagert ist, und daß das Kunststoffmaterial von solcher Beschaffenheit ist, daß es unter einer unfalltypischen Beanspruchung in die Freiräume zwischen Fahrzeugteil (40) und Verankerungsbeschlag (24) fließt und so den Verankerungsbeschlag in einer Schwenkstellung blockiert, die der Sicherheitsstellung zumindest nahekommt.

8. Befestigung nach Anspruch 1, dadurch gekennzeichnet, daß der Verankerungsbeschlag auf einer Achse (30) befestigt ist, die in Lageröffnungen der Lagersockel (32) des Fahrzeugteils (40) gelagert ist, daß zumindest eine der Lageröffnungen an einem Teil ihres Umfangs eine Ausbuchtung aufweist, welche nahe der Achse (30) verjüngt ist und sich von hier aus aufweitet, und daß die Achse (30) bei einer unfalltypischen Beanspruchung unter Materialverformung durch die Verjüngung in die Ausbuchtung gelangt und sich in dieser festklemmt, so daß der an die Achse gekoppelte Verankerungsbeschlag (24) in einer Schwenkstellung blockiert ist, die der Sicherheitsstellung zumindest nahekommt.

9. Befestigung nach einem der vorstehenden Ansprüche, dadurch gekennzeichnet, daß an den Verankerungsbeschlag (24) eine Steckzunge (22) für einen Verschluß (20) eines passiven Sicherheitsgurtsystems angeschlossen ist, in welchem der Verankerungsbeschlag (24) mittels eines Gleiters in einer Führungsschiene entlang dem oberen Türrahmen zwischen einer Gurtanlegestellung und einer Gurtablegestellung verfahrbar ist.

# Fig. 1

# Fig. 2a

# Fig. 2b

# Fig. 2c

## Fig. 3

## Fig. 4

## Fig. 5

## Fig. 6

## Fig. 7

# Fig. 8

# Fig. 9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 077 051   (NISSAN MOTOR) <br> * Seite 10, Zeile 26 - Seite 12, Zeile 19 * <br> – – – | 1 | B 60 R 22/06 |
| A | DE-A-3 314 588   (BROSE FAHRZEUGTEILE) <br> * Seite 10, Zeilen 3 - 36 * <br> – – – | 1 | |
| A | FR-A-2 518 031   (REPA FEINSTANZWERK) <br> * Seite 5, Zeile 35 - Seite 6, Zeile 1 * <br> – – – – – | 1 | |

**RECHERCHIERTE SACHGEBIETE (Int. Cl.5)**

B 60 R

Der vorliegende Recherchenbericht wurde für alle Patentansprüche erstellt

| Recherchenort | Abschlußdatum der Recherche | Prüfer |
|---|---|---|
| Den Haag | 08 Mai 91 | STANDRING M A |